# EUROPÄISCHE PATENTSCHRIFT

(11) **EP 3 834 273 B1**
(45) Veröffentlichungstag und Bekanntmachung des Hinweises auf die Patenterteilung: **16.11.2022**
(21) Anmeldenummer: 19742537.4
(22) Anmeldetag: 08.07.2019
(51) Int. Cl.: H02J 7/34, B60L 58/40, H01M 16/00, B60R 16/033, H02M 3/158

(54) **ELEKTRISCHES ENERGIESYSTEM MIT BRENNSTOFFZELLEN**
ELECTRICAL ENERGY SYSTEM COMPRISING FUEL CELLS
SYSTÈME D'ÉNERGIE ÉLECTRIQUE COMPRENANT DES PILES À COMBUSTIBLE

(30) Priorität: 07.08.2018 DE 102018213165
(43) Veröffentlichungstag der Anmeldung: 16.06.2021
(73) Patentinhaber: Audi AG, 85045 Ingolstadt (DE)
(72) Erfinder: BREU, Martin, 91560 Heilsbronn (DE); SCHIEDERMEIER, Maximilian, 85049 Ingolstadt (DE)
(74) Vertreter: Hentrich Patent- & Rechtsanwälte PartG mbB
(86) Internationale Anmeldenummer: PCT/EP2019/068222
(87) Internationale Veröffentlichungsnummer: WO 2020/030356

(56) Entgegenhaltungen:
- DE-A1-102011 108 920
- DE-A1-102015 011 897
- DE-A1-102016 219 493

## Beschreibung

Die Erfindung betrifft ein Brennstoffzellen enthaltendes elektrisches Energiesystem und ein Verfahren zum Betreiben eines elektrischen Energiesystems für ein Kraftfahrzeug.

In mobilen Brennstoffzellenanwendungen, z.B. Brennstoffzellenfahrzeugen, umfasst das Energiesystem mit dem Hochspannungsstromkreis (HV-Kreis) üblicherweise zwei Energiespeicher. In der Regel ist die Brennstoffzelle (BZ) einer der beiden Energiespeicher und eine HV-Batterie ist der zweite Energiespeicher. Da die Brennstoffzelle eine stark lastabhängige Spannung aufweist, wird sie üblicherweise über einen Gleichstromwandler (DC/DC-Wandler) mit der HV-Batterie gekoppelt. Der DC/DC-Wandler gleicht die unterschiedlichen Spannungen von BZ und HV-Batterie an. Der DC/DC-Wandler ist meistens als Hochsetzsteller ausgeführt, der in der Lage ist, die Ausgangsspannung der BZ auf das Spannungsniveau der HV-Batterie zu erhöhen. Um eine möglichst optimale Spannungsversorgung der an das Energiesystem angeschlossenen Verbraucher, z.B. der Antriebssysteme des Brennstoffzellenfahrzeugs, zu garantieren, werden diese in der Regel aus dem Stromkreis der HV-Batterie mit Strom versorgt.

Ein Hochsetzsteller ist jedoch lediglich in der Lage, die Spannung zu erhöhen. Wäre die BZ-Spannung in einem Arbeitspunkt höher als die der Batterie, so wären die beiden HV-Speicher hart über die Diode des DC/DC-Wandlers gekoppelt. Dies gilt es zu vermeiden. In manchen Energiesystemen ist die HV-Batterie so dimensioniert, dass in einigen Arbeitspunkten die Spannung der BZ höher ist als die der HV-Batterie, in anderen Arbeitspunkten jedoch die Spannung der HV-Batterie höher ist als die der BZ. In diesem Falle wird üblicherweise als DC/DC-Wandler ein Vollbrückenwandler eingesetzt, der einen höheren Bauteilaufwand erfordert als ein Hochsetzsteller. Zusätzlich zu den Schaltelementen eines Hochsetzstellers werden ein weiterer Schalter und eine weitere Diode benötigt. Dadurch werden Volumen, Gewicht und Kosten des Energiesystems erhöht. Die zusätzlichen Bauteile verursachen einen gegenüber einem Hochsetzsteller erhöhten Ansteuer- und Rechenaufwand. Aufgrund der schwierigen Regelbarkeit bei Spannungsparität ist die Robustheit des Energiesystems verringert.

Die vorliegende Erfindung hat sich die Aufgabe gestellt, Vorrichtungen und Verfahren zur Verfügung zu stellen, welche die geschilderten Nachteile zumindest teilweise beseitigen.

Die DE 10 2013 224 544 A1 offenbart ein Hybridsystem und Verfahren zum Betreiben eines Hybridsystems. Das Hybridsystem umfasst eine Brennstoffzelle, eine Speicherbatterie und eine Zusatzbatterie, die wahlweise an die Speicherbatterie angekoppelt oder von ihr abgekoppelt werden kann. Die Zusatzbatterie ist zum Laden über einen Inverswandler an die Speicherbatterie oder die Brennstoffzelle anschließbar.

Aus der DE 10 2011 007 339 A1 ist eine Versorgungsschaltungsanordnung zur Erzeugung einer Bordnetzspannung eines Fahrzeugs aus der Spannung einer Hochvoltbatterie bekannt, in der ein Spannungswandler die Aufgabe der Lichtmaschine übernimmt. Die Anordnung weist einen ersten Spannungswandler auf, der mittels eines Synchrongleichrichters gebildet ist und Energie aus der Hochvoltbatterie bezieht, und einen zweiten Spannungswandler, der als invertierender Gleichspannungswandler ausgeführt ist und eine Betriebsspannung zum Betrieb einer Verpol-Schutzschaltung der Anordnung liefert. Dem zweiten Spannungswandler ist ein Energiespeicher nachgeordnet, der im Verpol-Fall aufgeladen wird.

Aus der DE 10 2011 108 920 A1 geht ein elektrisches Umrichtersystem für Stromversorgungen hervor, welches aus einzelnen Modulen aufgebaut ist. Das Umrichtersystem umfasst mehrere Module mit Zwischenmodulen, in denen einen Inverswandler für einen verlustarmen Spannungsausgleich sorgt.

Die DE 10 2015 011 897 A1 betrifft eine Vorrichtung zum Bereitstellen von elektrischer Energie für eine elektrische Antriebseinheit eines Kraftfahrzeugs, mit einer Brennstoffzelle und einer Hochvoltbatterie zum Bereitstellen der elektrischen Energie, einem Gleichspannungswandler und einem Hochvoltzwischenkreis. Die Brennstoffzelle ist über den Gleichspannungswandler mit dem Hochvoltzwischenkreis elektrisch verbunden und der Hochvoltzwischenkreis ist zur Energieversorgung der elektrischen Antriebseinheit mit der elektrischen Antriebseinheit elektrisch verbindbar, wobei die Hochvoltbatterie zum Versorgen der elektrischen Antriebseinheit unmittelbar mit dem Hochvoltzwischenkreis elektrisch verbunden ist.

Aus der DE 10 2016 219 493 A1 ist ein Energiebereitstellungssystem für ein Kraftfahrzeug bekannt, mit einer Batterie zum Versorgen einer elektrischen Antriebsmaschine des Kraftfahrzeugs mit elektrischer Energie; einem Ladegerät zum Aufladen der Batterie; und einer als Reichweiten-Verlängerer dienenden Brennstoffzelle, mittels welcher elektrische Energie zum Aufladen der Batterie bereitstellbar ist. Die Brennstoffzelle ist über einen im Ladegerät integrierten Gleichspannungswandler des Ladegeräts zum Aufladen der Batterie mit dieser gekoppelt.

Die Aufgabe wird erfindungsgemäß gelöst durch ein Verfahren mit den Merkmalen des Anspruchs 1 sowie eine Vorrichtung mit den Merkmalen des Anspruchs 3. Ausgestaltungen und Weiterbildungen der Erfindung ergeben sich aus den abhängigen Ansprüchen.

Erfindungsgemäß wird die Vollbrückenwandler-Topologie des DC/DC-Wandlers durch die Inverswandler-Topologie ersetzt, um auch bei überlappenden Spannungsbereichen von HV-Batterie und Brennstoffzelle eine möglichst aufwandsarme und passende Anbindung zu erzielen. Auf diese Weise ergibt sich eine Möglichkeit der Kopplung mittels geringem Bauteilaufwand und geringem Ansteueraufwand.

Gegenstand der Erfindung ist ein Verfahren zum Betreiben eines Energiesystems für ein Fahrzeug, das mindestens eine Brennstoffzelle; mindestens eine HV-Batterie; und einen zwischen der mindestens einen Brennstoffzelle und der mindestens einen HV-Batterie angeordneten Gleichstromwandler umfasst, wobei der Gleichstromwandler ein Inverswandler ist, der in einem seiner Strompfade zwei in Reihe geschaltete Halbleiterschalter aufweist, zwischen denen eine Induktivität angeschlossen ist, welche die beiden Strompfade des Gleichstromwandlers verbindet. Bei dem erfindungsgemäßen Verfahren wird jeweils der Halbleiterschalter des Inverswandlers leitend geschaltet wird, der näher an der Energiequelle mit der aktuell höheren Ausgangsspannung angeordnet ist, und der näher an der Energiequelle mit der aktuell niedrigeren Ausgangsspannung angeordnete Halbleiterschalter gesperrt wird. Wenn die Ausgangsspannung beider Energiequellen gleich ist, werden in einer Ausführungsform des Verfahrens beide Halbleiterschalter leitend geschaltet.

Gegenstand der Erfindung ist ein auch ein zur Durchführung des erfindungsgemäßen Verfahrens eingerichtetes Energiesystem für ein Fahrzeug. Das Energiesystem umfasst mindestens eine Brennstoffzelle; mindestens eine HV-Batterie; und einen zwischen der mindestens einen Brennstoffzelle und der mindestens einen HV-Batterie angeordneten Gleichspannungswandler (DC/DC-Wandler). Der DC/DC-Wandler ist dabei ein Inverswandler, der in einem seiner Strompfade zwei in Reihe geschaltete Halbleiterschalter aufweist, zwischen denen eine Induktivität angeschlossen ist, welche die beiden Strompfade des Gleichstromwandlers verbindet.

In einer Ausführungsform umfasst der Inverswandler zwei Halbleiterschalter, eine Induktivität und zwei Kapazitäten. In einer Ausführungsform umfassen die Halbleiterschalter jeweils mindestens einen IGBT oder einen MOS-FET. Bei der erfindungsgemäßen Wandlertopologie sperrt einer der beiden Halbleiterschalter die Summe aus der HV-Batteriespannung und der Brennstoffzellenspannung, wenn der andere Halbleiterschalter leitend geschaltet ist. Infolge dieser Charakteristik sind die Halbleiterschalter im Inverswandler in einer Ausführungsform aus Halbleitermaterialien mit breitem Bandabstand (Wide-Bandgap-Halbleitern) hergestellt. Das Halbleitermaterial ist in einer Ausführungsform des Energiesystems Siliziumkarbid, in einer anderen Ausführungsform Galliumnitrid. Aus diesen Halbleitermaterialien hergestellte Schalter zeigen eine besonders gute Leistung bei höheren Spannungen (z.B. 900 V oder 1.200 V).

In einer Ausführungsform weist das erfindungsgemäße Energiesystem eine Betriebsspannung im Bereich von 800 V bis 1.500 V auf, insbesondere von 900 V bis 1.200 V.

Zu den Vorteilen des erfindungsgemäßen Energiesystems und Verfahrens zählen ein geringer Bauteil- und Ansteueraufwand, die eine kostengünstigere Umsetzung als bei Verwendung eines Vollbrückenwandlers ermöglichen. Zudem zeigt das Energiesystem infolge eines fließenden Übergangs bei Spannungsparität zwischen Brennstoffzelle und HV-Batterie eine gute Regelbarkeit. Weitere Vorteile und Ausgestaltungen der Erfindung ergeben sich aus der Beschreibung und der beiliegenden Zeichnung.

Die Erfindung ist anhand einer Ausführungsform in der Zeichnung schematisch dargestellt und wird unter Bezugnahme auf die Zeichnung weiter beschrieben. Es zeigt:

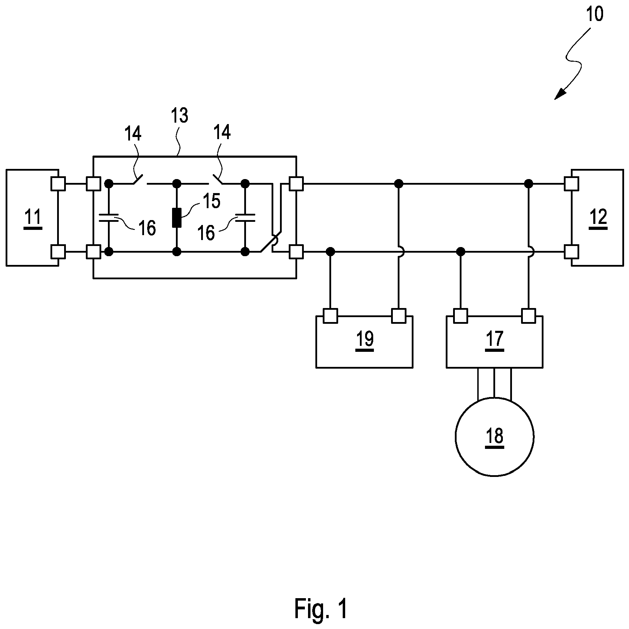

- Figur 1: eine schematische Darstellung einer Ausführungsform des erfindungsgemäßen Energiesystems mit angeschlossenen Verbrauchern.

Figur 1 zeigt eine schematische Darstellung einer Ausführungsform des erfindungsgemäßen Energiesystems 10 mit angeschlossenen Verbrauchern 17, 18, 19. Das Energiesystem 10 umfasst als Energiequellen eine Brennstoffzelle 11 und eine HV-Batterie 12. Diese sind über einen als Inverswandler ausgeführten Gleichstromwandler 13 verbunden. Der DC/DC-Wandler 13 umfasst zwei Halbleiterschalter 14, eine zwischen den Halbleiterschaltern 14 angeschlossene Induktivität 15, beispielsweise eine Speicherdrossel, und zwei Kapazitäten 16, die am Eingang bzw. Ausgang des DC/DC-Wandlers 13 angeordnet sind. An das Energiesystem 10 sind Pulswechselrichter 17 und Elektromotoren 18 angeschlossen, sowie weitere HV-Komponenten 19, wie Nebenaggregate der Brennstoffzelle, Ladegeräte, 12 V DC/DC-Wandler, HV-Heizer, elektrische Klimakompressoren etc.

### Bezuqszeichenliste

- 10: Energiesystem
- 11: Brennstoffzelle (BZ)
- 12: HV-Batterie
- 13: Inverswandler
- 14: Halbleiterschalter
- 15: Induktivität
- 16: Kapazität
- 17: Pulswechselrichter (PWR)
- 18: Elektromotor (EM)
- 19: Sonstige HV-Komponenten

## Patentansprüche

1. Verfahren zum Betrieb eines Energiesystems (10) für ein Fahrzeug, das mindestens eine Brennstoffzelle (11); mindestens eine HV-Batterie (12); und einen zwischen der mindestens einen Brennstoffzelle (11) und der mindestens einen HV-Batterie (12) angeordneten Gleichstromwandler (13) umfasst, wobei der Gleichstromwandler (13) ein Inverswandler ist, der in einem seiner Strompfade zwei in Reihe geschaltete Halbleiterschalter (14) aufweist, zwischen denen eine Induktivität (15) angeschlossen ist, welche die beiden Strompfade des Gleichstromwandlers (13) verbindet, worin jeweils der Halbleiterschalter (14) des Inverswandlers (13) leitend geschaltet wird, der näher an der Energiequelle (11, 12) mit der aktuell höheren Ausgangsspannung angeordnet ist, und der Halbleiterschalter (14) des Inverswandlers (13) gesperrt wird, der näher an der Energiequelle (11, 12) mit der aktuell niedrigeren Ausgangsspannung angeordnet ist.

2. Verfahren nach Anspruch 1, bei dem beide Halbleiterschalter (14) leitend geschaltet werden, wenn die Brennstoffzelle (11) und die HV-Batterie (12) die gleiche Ausgangsspannung aufweisen.

3. Zur Durchführung des Verfahrens nach Anspruch 1 oder 2 eingerichtetes Energiesystem (10) für ein Fahrzeug, umfassend mindestens eine Brennstoffzelle (11); mindestens eine HV-Batterie (12); und einen zwischen der mindestens einen Brennstoffzelle (11) und der mindestens einen HV-Batterie (12) angeordneten Gleichstromwandler (13), wobei der Gleichstromwandler (13) ein Inverswandler ist, der in einem seiner Strompfade zwei in Reihe geschaltete Halbleiterschalter (14) aufweist, zwischen denen eine Induktivität (15) angeschlossen ist, welche die beiden Strompfade des Gleichstromwandlers (13) verbindet.

4. Energiesystem (10) nach Anspruch 3, bei dem der Gleichstromwandler (13) zwei Halbleiterschalter (14), eine Induktivität (15) und zwei Kapazitäten (16) umfasst.

5. Energiesystem (10) nach Anspruch 4, bei dem die Halbleiterschalter (14) jeweils mindestens einen IGBT oder MOS-FET umfassen.

6. Energiesystem (10) nach Anspruch 4 oder 5, bei dem die Halbleiterschalter (14) aus Halbleitermaterialien mit breitem Bandabstand hergestellt sind.

7. Energiesystem (10) nach Anspruch 6, bei dem das Halbleitermaterial Siliziumkarbid ist.

8. Energiesystem (10) nach Anspruch 6, bei dem das Halbleitermaterial Galliumnitrid ist.

9. Energiesystem (10) nach einem der Ansprüche 3 bis 8, das eine Betriebsspannung im Bereich von 800 V bis 1.500 V aufweist.

## Claims

1. A method of operating an energy system (10) for a vehicle comprising at least one fuel cell (11); at least one HV-battery (12); and a direct current converter (13) arranged between the at least one fuel cell (11) and the at least one HV-battery (12), the direct current converter (13) being an inverse converter which has, in one of its current pathways, two series-connected semiconductor switches (14) between which an inductor (15) is connected which connects the two current paths of the direct current converter (13), wherein in each case the semiconductor switch (14) of the inverse converter (13) is rendered conductive which is arranged closer to the energy source (11, 12) with the currently higher output voltage, and the semiconductor switch (14) of the inverse converter (13) is rendered inactive which is arranged closer to the energy source (11, 12) with the currently lower output voltage.

2. The method according to claim 1, wherein both semiconductor switches (14) are rendered conductive when the fuel cell (11) and the HV-battery (12) have the same output voltage.

3. An energy system (10) for a vehicle, which is configured to implement the method according to claim 1 or 2, comprising at least one fuel cell (11), at least one HV-battery (12), and a direct current converter (13) arranged between the at least one fuel cell (11) and the at least one HV-battery (12), the direct current converter (13) being an inverse converter which has, in one of its current paths, two series-connected semiconductor switches (14) between which an inductor (15) is connected which connects the two current pathways of the direct current converter (13).

4. The energy system (10) of claim 3, wherein the direct current converter (13) comprises two semiconductor switches (14), an inductor (15), and two capacitors (16).

5. The energy system (10) of claim 4, wherein the semiconductor switches (14) each comprise at least one IGBT or MOS-FET.

6. The energy system (10) of claim 4 or 5, wherein the semiconductor switches (14) are made from a semiconductor material with broad band gap.

7. The energy system (10) of claim 6, wherein the semiconductor material is silicon carbide.

8. The energy system (10) of claim 6, wherein the semiconductor material is gallium nitride.

9. The energy system (10) according to any one of claims 3 to 8, having an operating voltage in the range of 800 V to 1500 V.

## Revendications

1. Procédé de fonctionnement d'un système d'énergie (10) pour un véhicule, qui comprend au moins une pile à combustible (11) ; au moins une batterie HV (12) ; et un convertisseur de courant continu (13) agencé entre la au moins une pile à combustible (11) et la au moins une batterie HV (12), dans lequel le convertisseur de courant continu (13) est un convertisseur inverse qui présente dans l'un de ses trajets de courant deux commutateurs à semi-conducteurs (14) montés en série, entre lesquels est raccordée une inductance (15) qui relie les deux trajets de courant du convertisseur de courant continu (13), dans lequel respectivement le commutateur à semi-conducteur (14) du convertisseur inverse (13), qui est agencé plus près de la source d'énergie (11, 12) avec la tension de sortie actuellement plus élevée, est rendu conducteur, et le commutateur à semi-conducteur (14) du convertisseur inverse (13), qui est agencé plus près de la source d'énergie (11, 12) avec la tension de sortie actuellement plus faible, est bloqué.

2. Procédé selon la revendication 1, dans lequel les deux commutateurs à semi-conducteurs (14) sont rendus conducteurs lorsque la pile à combustible (11) et la batterie haute tension (12) présentent la même tension de sortie.

3. Système d'énergie (10) pour un véhicule, aménagé pour la mise en œuvre du procédé selon la revendication 1 ou 2, comprenant au moins une pile à combustible (11) ; au moins une batterie HV (12) ; et un convertisseur de courant continu (13) agencé entre l'au moins une pile à combustible (11) et l'au moins une batterie HV (12), dans lequel le convertisseur de courant continu (13) est un convertisseur inverse qui présente dans l'un de ses trajets de courant deux commutateurs à semi-conducteurs (14) montés en série, entre lesquels est raccordée une inductance (15) qui relie les deux trajets de courant du convertisseur de courant continu (13).

4. Système d'énergie (10) selon la revendication 3, dans lequel le convertisseur de courant continu (13) comprend deux commutateurs à semi-conducteurs (14), une inductance (15) et deux capacités (16).

5. Système d'énergie (10) selon la revendication 4, dans lequel les commutateurs à semi-conducteurs (14) comprennent chacun au moins un IGBT ou un MOS-FET.

6. Système d'énergie (10) selon la revendication 4 ou 5, dans lequel les commutateurs à semi-conducteurs (14) sont fabriqués à partir de matériaux semi-conducteurs à large bande interdite.

7. Système d'énergie (10) selon la revendication 6, dans lequel le matériau semi-conducteur est du carbure de silicium.

8. Système d'énergie (10) selon la revendication 6, dans lequel le matériau semi-conducteur est le nitrure de gallium.

9. Système d'énergie (10) selon l'une quelconque des revendications 3 à 8, qui présente une tension de fonctionnement dans la plage de 800 V à 1 500 V.
